Europäisches Patentamt

European Patent Office

Office européen des brevets

(11) Veröffentlichungsnummer: **0 419 952 A1**

# (12) EUROPÄISCHE PATENTANMELDUNG

(21) Anmeldenummer: 90117613.1

(22) Anmeldetag: 13.09.90

(51) Int. Cl.5: **C08C 19/08**

(30) Priorität: 26.09.89 DE 3932019

(43) Veröffentlichungstag der Anmeldung:
03.04.91 Patentblatt 91/14

(84) Benannte Vertragsstaaten:
DE FR GB IT

(71) Anmelder: **BAYER AG**

**W-5090 Leverkusen 1 Bayerwerk(DE)**

(72) Erfinder: **Obrecht, Werner, Dr.**
**Holderbergerstrasse 108**
**W-4130 Moers 2(DE)**
Erfinder: **Szentivanyi, Szolt, Dr., c/o Bayer**
**Japan Ltd.**
**P.O. Box Shiba 159, Seiwa Building, 12-15**
**Shiba Daimon 1-chome, Minato-ku,**
**Tokyo(DE)**
Erfinder: **Waniczek, Helmut, Dr. c7o Bayer do**
**Brasil S.A.**
**Belfort Roxo Caixa Postal 1500**
**CEP 20.000 650 Rio de Janeiro(BR)**

(54) Verfahren zur Herstellung von hydriertem Nitrilkautschuk mässiger Viskosität.

(57) Hydrierter Nitrilkautschink kann durch thermooxydativen Abbau zu einem niederviskosen Produkt verarbeitet werden, das für einzelne Anwendungen aufgrund besserer Fließfähigkeit besser als das Ausgangsprodukt geeignet ist. Die Vulkanisate zeichnen sich durch relativ hohe Festigkeiten aus.

EP 0 419 952 A1

## VERFAHREN ZUR HERSTELLUNG VON HYDRIERTEM NITRILKAUTSCHUK MÄSSIGER VISKOSITÄT

Die Erfindung betrifft ein Verfahren zur Herstellung von hydriertem Nitrilkautschuk (HNBR) mäßiger Viskosität und infolgedessen guter Verarbeitbarkeit durch thermooxydativen Abbau von HNBR höherer Viskosität.

HNBR-Vulkanisate gelten wegen ihrer gegenüber Nitrilkautschuk (NBR) - Vulkanisaten verbesserten Öl- und Ozonbeständigkeit als hervorragende Gummis, die insbesondere dort, wo sie der Einwirkung von Hitze, Kraft- und Schmierstoffen ausgesetzt sind, vielen anderen Materialien überlegen sind. Deswegen wird HNBR beispielsweise auch als Kautschukkomponente für die Herstellung von Treibriemen (Keil- und Zahnriemen) empfohlen. Solche Artikel enthalten zur Begrenzung unerwünschter Dehnung eine verstärkende Einlage (Gewebe). Um einen bestmöglichen Verbund zwischen Vulkanisat und Verstärkungsfasern zu erzielen, muß der Kautschuk bei der Herstellung dieser Artikel so plastisch sein, daß er die Zwischenräume des Gewebes erreicht und gut ausfüllt

Kautschuke mit niedriger Mooney-Viskosität erfüllen diese Anforderung an die Fließfähigkeit im Prinzip; zufriedenstellen können sie aber nur dann, wenn die daraus hergestellten Vulkanisate auch die geforderte Festigkeit aufweisen. Üblicherweise gilt aber, daß niederviskose Kautschuke zu Vulkanisaten mit geringer Festigkeit führen und Kautschuke, aus denen Vulkanisate hoher Festigkeit herstellbar sind, eine für den geschilderten Zweck zu hohe Viskosität besitzen.

Es wurde nun ein Verfahren gefunden, nach dem durch thermooxydativen Abbau von HNBR ein Kautschuk erhalten werden kann, der beiden Anforderungen gerecht wird; außerdem weist er einen geringen Gelgehalt auf.

Gegenstand der Erfindung ist ein Verfahren zur Herstellung von hydriertem Nitrilkautschuk einer Mooney-Viskosität von 30 bis 50, vorzugsweise 30 bis 40 (ML 1 + 4) 100°C durch thermooxydativen Abbau eines hydrierten Nitrilkautschuks einer Mooney-Viskosität von 55 bis 100 (ML 1 + 4) 100°C bei einer Massetemperatur von 100 bis 270, vorzugsweise 140 bis 250°C, durch Scheren mit einer Scherrate von 30 bis 5.000, vorzugsweise 50 bis 1.000 sec$^{-1}$, bis die gewünschte Mooney-Viskosität erreicht ist.

Den für das erfindungsgemäße Verfahren als Ausgangsprodukte einzusetzenden hydrierten Nitrilkautschuken liegen vorzugsweise Butadien/Acrylnitril-Copolymerisate mit einem Gehalt an copolymerisiertem Acrylnitril von 5 bis 60, vorzugsweise 10 bis 50 Gew.-% zugrunde. "Hydriert" bedeutet in diesem Zusammenhang, daß 90 bis 98,5, vorzugsweise 95 bis 98 % der hydrierbaren C=C-Doppelbindungen hydriert sind. Der Hydriergrad kann IR-spektroskopisch bestimmt werden.

Die Hydrierung von NBR ist bekannt; US-PS 3 700 637, DE-OS 2 539 132, 3 046 008, 3 046 251, 3 227 650, 3 329 974, EP-A 111 412, FR-PS 2 540 503. Hydrierter Nitrilkautschuk zeichnet sich vor allem durch vergleichsweise hohe Stabilität gegen Oxidation aus.

Die Mooney-Viskosität wird nach DIN 53 523 bestimmt.

Geeignete Aggregate zur Durchführung des erfindungsgemäßen Verfahrens umfassen vorzugsweise beheizbare Ein-und Mehrwellenschnecken, insbesondere Zweiwellenschnecken, mit Längen/Durchmesser-Verhältnissen von 10 bis 100, Be- und Entgasungsöffnungen und gegebenenfalls weiteren Einfüllöffnungen für Mastizierhilfsmittel. Die für die nachfolgenden Beispiele verwendete Schnecke war eine Zweiwellenschnecke mit gleichlaufenden Schnecken mit einer Länge von 120 cm, einem Zylinderdurchmesser von 3 cm und folgendem Aufbau:

Eingangszone 1 (Länge 10 cm) mit Einfüllöffnung,
Aufheizzone 2 (Länge 10 cm),
Dosierzone 3 (Länge 10 cm) mit Begasungsöffnung,
Reaktionszone 4 (Länge 60 cm) mit Einfüllöffnungen in der Mitte und am Ende der Zone,
Entgasungszone 5 (Länge 20 cm) mit Entgasungsöffnung,
Extrusionszone 6 (Länge 10 cm) mit Extrusionskopf.

Der thermooxydative Abbau verlangt die Gegenwart eines Mittels, das die durch die aufgebrachte mechanische Energie entstandenen Bruchstücke mit terminalen freien Radikalen zu stabilisieren vermag. Derartige Mittel umfassen Sauerstoff selbst, freien Sauerstoff enthaltende Gasgemische wie z.B. Luft, und Sauerstoffspender, die chemisch gebundenen Sauerstoff unter Reaktionsbedingungen abgeben, wie z.B. Peroxide, Nitrate und Chlorate. Aus Kostengründen ist Luft das bevorzugte Mittel.

Das erfindungsgemäße Verfahren wird vorzugsweise unter Verwendung von Radikalübertragungsmitteln durchgeführt, wobei Mittel mit Radikalübertragungskonstanten von

50 . 10$^4$ bis 20.000 . 10$^4$, vorzugsweise
100 . 10$^4$ bis 200 . 10$^4$, insbesondere
150 . 10$^4$ bis 180 . 10$^4$

besonders wirksam sind. Die angegebenen Werte beziehen sich auf eine Ethylenpolymerisation bei 130°C, wie sie im Polymer Handbook, Hrsg.: J. Brandrup, E.H. Immergut, 2. Aufl., Wiley, New York 1975, aufgeführt sind. Solche Radikalübertragungsmittel umfassen Mercaptane wie die isomeren Xylylmercaptane, Thiophenole und ihre Zinksalze wie Pentachlorthiophenol, Zinkpentachlorthiophenol, $\beta$-Thionaphthol, und Zink-o-benzamido-thiophenol, aromatische Disulfide wie o.o'-Dibenzamidodiphenyldisulfid; Salze gesättigter Fettsäuren, Toluol, Aceton, Tetrachlormethan, Iodoform und Cumol.

Die notwendigen Mengen hängen hauptsächlich vom gewünschten Grad des Abbaus ab und lassen sich durch einige wenige Vorversuche zuverlässig bestimmen.

Die erfindungsgemäß hergestellten niederviskosen Kautschuke lassen sich aufgrund ihrer funktionellen Gruppen, die durch die Abbaureaktion entstehen, alleine mit Metalloxiden als Vulkanisiermittel, wie Magnesiumoxid und/oder Zinkoxid vulkanisieren. Die Mengen der verwendeten Vulkanisiermittel beträgt in der Regel 2 bis 10 Gew.-%, bezogen auf Kautschuk.

Die Vulkanisation kann bei Temperaturen von 100 bis 200°C, vorzugsweise 130 bis 180°C, gegebenenfalls unter einem Druck von 10 bis 200 bar, erfolgen.

Die hervorragenden Vulkanisateigenschaften werden in der Regel schon ohne Temperung erreicht, lassen sich aber durch Tempern oft noch verbessern.

Die in den folgenden Beispielen genannten Teile sind Gewichtsteile.

Der in den Beispielen für das Hydrierungsprodukt angegebene C=C-Restdoppelbindungsgehalt bezieht sich jeweils auf 1.000 C-Atome, wobei die C-Atome der Nitrilgruppen nicht mitgezählt werden.

## Beispiele

Allgemeine Verfahrensbeschreibung:

Die Umdrehungszahl der Schnecke variiert zwischen 40 -60 min⁻¹, wobei zwischen 1,5 - 2,5 kg/h Produkt durchgesetzt werden. In der Aufheizzone (2) wird das Produkt erhitzt und in Zone (3) mit 200 - 700 Normliter Luft unter Druck (2 - 40 bar) vermischt. Danach wird das Produkt bei definierter Massetemperatur durch die Reaktionszone (4) gefördert. Bei dem erfindungsgemäßen Verfahren kann das Polymere entweder in der Mitte oder am Ende der Reaktionszone (4) mit weiteren Hilfsmitteln versetzt werden (s. einzelne Beispiele).

In der Entgasungszone (5) werden bei einem Druck von 10 - 500 mbar nicht umgesetzte Luft und nicht umgesetzte flüchtige Hilfsmittel aus dem Produkt entfernt. Danach wird das Produkt über einen Extrusionskopf aus der Zweiwellenschnecke ausgefahren.

Der Gelgehalt wird mittels Ultrazentrifuge bestimmt (Konzentration 5 Gew.-% in Toluol bei 25°C).

## Beispiel 1

Ein HNBR mit einem Gehalt an copolymerisiertem Acrylnitril von 34,3 Gew.-%, einer Mooney-Viskosität von 73 (ML 1 + 4) 100°C und einem C=C-Restdoppelbindungsgehalt von 24 Doppelbindungen pro 1000 C-Atome wird zu einem HNBR mit einer Mooney-Viskosität von 42 (ML 1 + 4) 100°C umgearbeitet.

Hierzu werden bei einer Wellendrehzahl von 40 min⁻¹ 2,27 kg HNBR durch die Zweiwellenschnecke gefördert. In der Aufheizzone (2) wird das Produkt auf eine Massetemperatur von 230°C aufgeheizt. In Zone (3) wird Luft eindosiert (1,4 m³/h) und das Produkt in die Reaktionszone (4) weitergefördert. Am Ende der Reaktionszone (4) wird eine Lösung von 11,51 g styrolisiertem Diphenylamin in 12 l Aceton (®Vulkanox DDA der Bayer AG) in einer Menge von 180 ml/h eindosiert. Aceton und nicht umgesetzte Luft werden in der Entgasungszone (5) bei einem Druck von 40 - 50 mbar entfernt, wobei der Kautschuk auf eine Massetemperatur von 180°C augeheizt wird. Nach dem Austrag aus der Zweiwellenschecke war das Produkt in Chlorbenzol löslich; der Gelgehalt betrug weniger als 4 Gew.-%.

## Beispiel 2

Ein HNBR mit einem Gelgehalt an copolymerisiertem Acrylnitril von 34 Gew.-%, einer Mooney-Viskosität von 71 (ML 1 + 4) 100°C und einem C=C-Restdoppelbindungsgehalt von 14 Doppelbindungen pro 1000 C-Atome wird zu einem HNBR mit einer Mooney-Viskosität von 40 (ML 1 + 4) 100°C umgearbeitet.

Hierzu werden bei einer Umdrehungszahl der Wellen von 40 min⁻¹ 2,4 kg/h HNBR durch die Zweiwellenschnecke gefördert. In der Aufheizzone (2) wird das Produkt auf eine Massetemperatur von 240° C aufgeheizt. In Zone (3) wird Luft eindosiert (1650 l/h) und das Produkt in die Reaktionszone (4) weitergefördert. Am Ende der Reaktionszone (4) wird eine Lösung von styrolisiertem Diphenylamin in Aceton (Konzentration und Menge wie in Beispiel 1) eindosiert. Aceton und nicht umgesetzte Luft werden in der Entgasungszone (5) bei einem Druck von 40 - 50 mbar entfernt, wobei der Kautschuk auf eine Massetemperatur von 180° C aufgeheizt wird. Nach dem Austrag aus der Zweiwellenschnecke war das Produkt in Chlorbenzol löslich; der Gelgehalt betrug weniger als 4 Gew.-%.

Beispiel 3

Ein HNBR mit einem Gelgehalt an copolymerisiertem Acrylnitril von 33,5 Gew.-%, einer Mooney-Viskosität von 72 (ML 1 + 4) 100° C und einem C = C-Restdoppelbindungsgehalt von 2,2 Doppelbindungen pro 1000 C-Atome wird zu einem HNBR mit einer Mooney-Viskosität von 45 (ML 1 + 4) 100° C umgearbeitet.

Hierzu werden bei einer Umdrehungszahl der Wellen von 40 min⁻¹ 2,4 kg/h HNBR durch die Zweiwellenschnecke gefördert. In der Aufheizzone (2) wird das Produkt auf eine Massetemperatur von 240° C aufgeheizt. In Zone (3) wird Luft eindosiert (1,65 m³/h) und das Produkt in die Reaktionszone (4) mit einer Temperatur von 150° C weitergefördert. Am Ende der Reaktionszone (4) wird eine Lösung von styrolisiertern Diphenylamin in Aceton (Konzentration und Menge wie in Beispiel 1) eindosiert. Aceton und nicht umgesetzte Luft werden in der Entgasungszone (5) bei einem Druck von 15 - 50 mbar entfernt, wobei der Kautschuk auf eine Massetemperatur von 180° C aufgeheizt wird. Nach dem Austrag aus der Zweiwellenschnecke als Strang war das Produkt in Chlorbenzol löslich; der Gelgehalt betrug weniger als 4 Gew.-%. Die Elementaranalyse ergab einen Gehalt an chemisch gebundenem Sauerstoff von 0,12 Gew.-%.

Eigenschaften

Je idealer die Netzstruktur, d.h. je geringer die Anzahl freier Kettenenden ist, desto höher ist die dynamische Lebensdauer eines Vulkanisats, gemessen als Zyklenzahl beim Dauerknickversuch nach DIN 53 522.

I. Im folgenden wird HNBR mit einer Mooney-Viskosität von 42 (ML 1 + 4) 100° C aus Beispiel 1 (erfindungsgemäß hergestellt) mit einem nicht erfindungsgemäß hergestellten HNBR mit einem Gehalt an copolymerisiertem Acrylnitril von 34 Gew.-%, einer Mooney-Viskosität von 70 (ML 1 + 4) 100° C und einem C = C-Restdoppelbindungsgehalt von 28 Doppelbindungen pro 1000 C-Atome verglichen.

Je 100 Teile HNBR wurden mit

5 Teilen aromatischem Polyether,

0,5 Teilen Schwefel,

65 Teilen Ruß,

5 Teilen Zinkoxid,

1 Teil Stearinsäure,

3 Teilen Magnesiumoxid,

1,5 Teilen styrolisiertem Diphenylamin (®Vulkanox DDA der Bayer AG),

2 Teilen Zinksalz des Mercaptobenzthiazols,

2 Teilen Tetramethylthiuramdisulfid und

0,5 Teilen Benzthiazyl-2-cyclohexylsulfenamid

gemischt.

|  | Vergleich | Erfindung |
|---|---|---|
| Mooney-Viskosität der Mischung [(ML 1 + 4)100°C]<br>Vulkameter 170°C - $t_{10}$ (min)<br>- $t_{90}$ (min) | 120<br>2,4<br>5,0 | 105<br>1,7<br>7,8 |
| Vulkanisation 15 min/170°C | | |
| Festigkeit [MPa]<br>Dehnung [%]<br>*S 100 [MPa]<br>Härte (Shore A)<br>Lebensdauer im Dauerknickversuch, Stufe 3 [Zyklen] | 17,0<br>460<br>5,2<br>76<br><100.000 | 11,0<br>430<br>4,8<br>75<br>600.000 |

\* Spannungswert bei 100 % Dehnung

Die Ergebnisse des Dauerknickversuchs zeigen, daß das Vulkanisat des erfindungsgemäß hergestellten HNBR eine idealere Netzstruktur als das Vergleichsvulkanisat besitzt.

II. Im folgenden werden Ausgangs- und End-HNBR aus Beispiel 2 mit Metalloxiden vulkanisiert. An den Vulkanisaten werden Festigkeit, Dehnung und Spannungswert bestimmte.

Je 100 Teile HNBR wurden mit

65 Teilen Ruß,

3 Teilen Zinkoxid und

3 Teilen Magnesiumoxid gemischt. Die Mischungen wurden 10 Minuten bei 150°C vulkanisiert.

|  | Vergleich | Erfindung |
|---|---|---|
| Festigkeit [MPa]<br>Dehnung [%]<br>*S 300 [MPa] | 3,2<br>> 1100<br>2,0 | 3,8<br>550<br>3,7 |

\* Spannungswert bei 100 % Dehnung

Die Ergebnisse zeigen, daß eine Vulkanisation nur bei dem erfindungsgemäß hergestellten HNBR stattgefunden hat.

## Ansprüche

1. Verfahren zur Herstellung von hydriertem Nitrilkautschuk einer Mooney-Viskosität von 30 bis 50 (ML 1 + 4) 100°C durch thermooxydativen Abbau eines hydrierten Nitrilkautschuks einer Mooney-Viskosität von 55 bis 100 (ML 1 + 4) 100°C bei einer Massetemperatur von 100 bis 270°C durch Scheren mit einer Scherrate von 30 bis 5.000 sec$^{-1}$, bis die gewünschte Mooney-Viskosität erreicht ist.

2. Verfahren nach Anspruch 1 bei einer Massetemperatur von 140 bis 250°C.

**Europäisches Patentamt**

**EUROPÄISCHER RECHERCHENBERICHT**

Nummer der Anmeldung

**EP 90 11 7613**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 111 391 (POLYSAR LTD) <br> * Ansprüche 1-2 * <br> _ _ _ _ _ | | C 08 C 19/08 |

| | RECHERCHIERTE SACHGEBIETE (Int. Cl.5) |
|---|---|
| | C 08 C |

Der vorliegende Recherchenbericht wurde für alle Patentansprüche erstellt

| Recherchenort | Abschlußdatum der Recherche | Prüfer |
|---|---|---|
| Den Haag | 14 Januar 91 | VAN HUMBEECK F.W.C. |